# FASCICULE DE BREVET EUROPEEN

(11) **EP 3 938 957 B1**
(45) Date de publication et mention de la délivrance du brevet: **18.10.2023**
(21) Numéro de dépôt: 20709254.5
(22) Date de dépôt: 13.03.2020
(51) Int. Cl.: G06K 19/06, G06K 19/10

(54) **PROCÉDÉ DE RÉALISATION D'UNE ÉTIQUETTE COMPORTANT UN CODE DE SÉCURITÉ CACHE, ET PROCÉDÉ DE MISE EN OEUVRE DE L'ÉTIQUETTE OBTENUE**
VERFAHREN ZUR HERSTELLUNG EINES ETIKETTS MIT VERSTECKTEM SICHERHEITSCODE UND VERFAHREN ZUR IMPLEMENTIERUNG DES BESAGTEN ETIKETTS
METHOD FOR PRODUCING A LABEL COMPRISING A HIDDEN SECURITY CODE AND METHOD FOR IMPLEMENTING SAID LABEL

(30) Priorité: 14.03.2019 FR 1902627
(43) Date de publication de la demande: 19.01.2022
(73) Titulaire: Novatec SA, 82000 Montauban (FR)
(72) Inventeur: BOURRIERES, Francis, 82000 MONTAUBAN (FR); BOURRIERES, Franck, 82000 MONTAUBAN (FR)
(74) Mandataire: Ipside
(86) Numéro de dépôt international: PCT/EP2020/056980
(87) Numéro de publication internationale: WO 2020/183017

(56) Documents cités:
- EP-A1- 3 221 827
- EP-B1- 3 221 827
- CN-U- 205 810 263
- FR-A1- 3 061 582

## Description

### Domaine technique de l'invention

L'invention appartient au domaine des étiquettes comportant des marquages dont au moins un code de sécurité est caché et leur procédé sécurisé de fabrication et de mise en oeuvre.

L'invention concerne un système d'authentification comportant une étiquette présentant trois codes et deux bases de données indépendantes dans lesquelles sont sauvegardés lesdits codes, chaque base de données comportant un code inconnu de l'autre base de données et un code connu de deux bases de données.

En particulier, l'invention propose une architecture de système d'authentification divisant les données nécessaires à la fabrication d'une étiquette authentique en deux bases de données indépendantes. Cette architecture va permettre d'une part de prévenir une fraude lors de la fabrication des étiquettes, d'autre part, la vérification de l'authenticité d'une étiquette ne pourra se faire que par la consultation de deux bases de données indépendantes. Il sera alors possible d'attribuer la gestion de bases de données à des acteurs différents et d'intégrer des solutions logistiques avec de multiples acteurs dans le procédé de contrôle d'une étiquette.

De manière non restrictive, le terme « étiquette » sera utilisé pour désigner un support de marquages.

L'invention concerne également un procédé de réalisation de l'étiquette dudit système d'authentification et un procédé de contrôle d'une telle étiquette.

### Etat de la technique

L'utilisation de codes de sécurité cachés sur des étiquettes est connue. De tels codes de sécurité sont rendus invisibles pour ne pas être lus jusqu'à une étape de contrôle ou de validation de l'étiquette dans laquelle le code de sécurité est rendu visible. Des telles étiquettes sont souvent utilisées dans des applications attribuant une valeur de manière indirecte audit code caché. Par exemple, le code peut déterminer l'accès à des données ou des services sécurisés, ou déterminer le gagnant d'un jeu portant sur un gain économique important. Lorsque la valeur attribuée à ce code secret est élevée, l'intérêt d'acquérir frauduleusement lesdites étiquettes se voit également augmenté.

Plusieurs solutions existent aujourd'hui pour prévenir la copie ou la réutilisation d'une étiquette de sécurité ou d'authentification. Ces solutions visent uniquement la fraude après la mise à disposition au public des étiquettes et n'envisagent pas une possible fraude par le fabricant autorisé des étiquettes.

Il existe donc un intérêt à créer un système d'authentification permettant d'améliorer la sécurité de fabrication des étiquettes, ainsi que permettant de simplifier le respect de normes de sécurité et confidentialité pour l'entité en charge de la production desdites étiquettes. Il est souhaité aussi un système d'authentification permettant l'intégration des fonctions logistiques autres que la simple validation d'authenticité d'un produit ou la traçabilité d'un produit.

Le document CN 205 810 263 U décrit un système d'authentification comprenant une étiquette présentant au moins 3 codes pour l'identification et la validation d'authenticité de ladite étiquette. Les différents codes sont stockés dans une base de données les reliant.

Le document EP 3 221 827 A1 et le document FR 3 061 582 A1 décrivent des systèmes d'authentification comportant des étiquettes présentant un code d'identification et un code secret.

### Présentation de l'invention

L'invention apporte une solution à ces difficultés au moyen d'un système d'authentification comportant une étiquette présentant au moins trois codes qui ne sont pas connus d'une seule base de données lors de la réalisation de l'étiquette mais d'aux moins deux bases générées par des processus indépendants de sorte qu'il n'est pas possible en dehors de la consultation des différentes bases de savoir si une étiquette est authentique même lorsque les trois codes deviennent accessibles au public.

Plus particulièrement, l'invention propose un système d'authentification comportant une étiquette présentant au moins trois codes pour l'identification et la validation d'authenticité de ladite étiquette, caractérisé en ce que le système comporte :
- au moins deux bases de données BD indépendantes dans lesquelles sont enregistrés lesdits au moins trois codes,
et en ce que chaque base de données BD comporte :
- un code inconnu de l'autre base de données,
- un code connu de deux bases de données,
- ledit code connu étant apparié avec l'un desdits codes inconnus.

Il est ainsi possible, de diviser les données nécessaires à la reproduction illégale d'une étiquette dans deux bases de données indépendantes, c'est-à-dire des bases de données construites et gérées de manière individuelle. L'accès et la modification de chaque base de données comporteront donc un accès sécurisé spécifique à ladite base de données. L'autorisation d'accéder à une base de données n'implique pas une autorisation d'accéder à la deuxième base de données.

Ce système est très avantageux car le protocole de confidentialité et d'accès autorisé à chaque base de données sera moins contraignant que le protocole requis lorsqu'une seule base de données contient toutes les informations nécessaires pour envisager une fraude du système.

L'invention propose de manière non limitative, de mettre en oeuvre ce système au moyen d'une étiquette dans laquelle les trois codes correspondent à :
- un code secret caché correspondant à un premier code dit inconnu et présent uniquement sur l'une des bases de données ;
- un code de suivi unique visible et correspondant audit code dit connu de deux bases de données ;
- un code série visible et correspondant à un deuxième code dit inconnu et présent uniquement sur l'une des bases de données ;
et les deux bases de données correspondent à :
- une première base de données dans laquelle sont appariés le code série et le code de suivi
- une deuxième base de données dans laquelle sont appariés le code secret avec le code de suivi.

Dans un mode de réalisation préféré de l'invention, l'étiquette comporte :
- un substrat arrière comportant le code secret caché ou masqué et le code de suivi appariés dans ladite deuxième base de données correspondant à une « base de données de substrats arrière » BDar,
- un substrat avant, superposé audit substrat arrière et déterminant une face avant de lecture de l'étiquette, ledit substrat avant comportant le code série et étant superposé au substrat arrière de manière à permettre la lisibilité du code de suivi,
et dans lequel système le code série et le code de suivi sont appariés dans la première base de données correspondant à une base de données d'étiquettes enregistrées BDen.

L'invention concerne également le procédé de réalisation dudit système d'authentification comportant une étiquette avec deux substrats superposés :
- une étape A de réalisation d'un substrat arrière d'étiquette comportant les étapes :
   + d'impression sur ledit substrat arrière d'un code suivi et d'un code secret ;
   + de dépôt optionnel d'un masque sur le code secret ;
   + d'appariement du code de suivi et du code secret, dans une base de données BDar des substrats arrière ;
- une étape B, indépendante de l'étape A, de réalisation d'un substrat avant, comportant l'impression d'un code série unique,
- une étape C de formation de l'étiquette, comportant les étapes :
   +d'assemblage du substrat avant sur la face avant du substrat arrière, de sorte que le code secret se trouve recouvert par ledit substrat avant et de sorte que le code de suivi reste visible depuis la face avant de l'étiquette ;
   + de lecture du code série et du code de suivi de l'étiquette ;
- une étape D d'enregistrement de l'étiquette dans laquelle étape d'enregistrement le code série de l'étiquette et le code de suivi sont appariés dans une base de données BDen des étiquettes enregistrées ; et dans lequel procédé chaque base de données BDar, BDen est construite, modifiée et gérée de manière indépendante à l'autre base de données.

De cette manière, le code secret n'est pas connu du fabricant du substrat avant et ou de l'opérateur réalisant l'assemblage du substrat avant et du substrat arrière qui n'aurait pas accès à la base de données des substrats arrière. Le code série d'une étiquette n'est pas non plus connu du fabricant du substrat arrière qui n'aurait pas accès à la base de données d'enregistrement des étiquettes.

Dans le processus de fabrication de l'étiquette, seul l'enregistrement de l'étiquette permet un contrôle à posteriori de l'authenticité de l'étiquette en rendant possible le rapprochement des deux bases de données BDar et BDen au moyen de l'intermédiaire du code de suivi. Cet enregistrement peut être effectué lors de l'étape C d'assemblage de l'étiquette ou lors de sa première utilisation au vu de sa vérification.

L'indépendance des étapes A, B et C pour leurs mises en oeuvre respective est dans le procédé un élément de sécurité, qui rend plus difficile la fraude sur les étiquettes obtenues par le procédé.

Pour autant qu'elles soient techniquement combinables, le système d'authentification et/ou le procédé de réalisation dudit système comporte le cas échéant :
- une étape préliminaire dans laquelle sont définis des attributs d'une famille d'étiquettes à laquelle appartient l'étiquette, lesdits attributs comportant des dimensions du substrat avant et du substrat arrière et les emplacements des différents marquages dont le code série, le code de suivi et le code secret.
- qu'au moins deux étapes parmi l'étape A de réalisation d'un substrat arrière, l'étape B de réalisation d'un substrat avant et l'étape C de formation de l'étiquette sont mises en oeuvre à des moments différents, et ou en des lieux différents et ou par des opérateurs différents.
- que lors de l'assemblage du substrat avant sur la face avant du substrat arrière dans l'étape C de formation de l'étiquette le code de suivi du substrat arrière n'est pas recouvert par le substrat avant ou est visible à travers une fenêtre transparente dudit substrat avant.
- que le code de suivi et le code secret du substrat arrière sont pris parmi une liste de codes de suivi et de codes secrets de la base de données BDar des substrats arrière réalisée préalablement pour une famille d'étiquettes, parmi les codes de suivi n'ayant pas été attribués antérieurement à un substrat arrière, et dans laquelle base de données BDar chaque code de suivi est apparié avec un code secret.
- que le code série du substrat avant est pris parmi une liste de codes série de la base de données BDav des substrats avant réalisée préalablement pour une famille d'étiquettes, parmi les codes série n'ayant pas été attribués antérieurement à un substrat avant.
- que le masque est réalisé au moyen d'une encre à gratter opaque ou au moyen d'un film adhésif opaque pouvant être pelé.
- que tout ou partie des marquages du substrat avant sont réalisés sur une face arrière du substrat avant dans une zone transparente du substrat avant pour être lisible en vitrauphanie depuis la face avant du substrat avant
- que le code série est incorporé dans tout ou partie parmi : une chaîne alphanumérique, un code à barres, un code à deux dimensions, une puce électronique à lecture sans contact.
- qu'une url de connexion à un service de vérification de l'authenticité de l'étiquette est incorporée dans un code à deux dimensions et ou dans une puce électronique à lecture sans contact.
- que le code série est imprimé sur le substrat avant pour être physiquement superposé au masque dans l'étiquette et de sorte que l'accès au code secret entraîne la destruction du marquage du code série.
- que le code de suivi est incorporé dans un code à deux dimensions et ou dans une puce électronique à lecture sans contact.

L'invention concerne également un procédé de mise en oeuvre du système de l'invention, comportant :
- une première étape d'accès à une application logicielle au moyen de l'acquisition du code de série, ladite application logicielle étant configurée pour interroger la première base de données et vérifier ledit code de série et le code de suivi appariés dans la base de données BDen, ladite base de données BDen étant gérée par un premier acteur ; ledit premier acteur est par exemple un tiers de confiance chargé d'attester la liberté d'utilisation lorsque cette étiquette n'a pas encore été utilisée ou au contraire son invalidation lorsqu'elle a été utilisée;
- une deuxième étape, effectuée suite à une vérification positive lors de la première étape, dans laquelle l'application logicielle interroge la deuxième base de données BDar au moyen du code de suivi pour obtenir le code secret apparié audit code de suivi, ladite deuxième base de données étant gérée par un deuxième acteur ;
- une troisième étape dans laquelle une étiquette est authentifiée lorsque le code secret transmis par la base de données de substrat arrière correspond au code secret lu sur l'étiquette, et
- une quatrième étape dans laquelle l'application logicielle informe la première base de données BD1, BDen de l'utilisation du code secret.

Il est à noter que la troisième étape peut être validée soit par l'application logicielle, soit par un utilisateur de l'étiquette, soit par le gérant d'une de bases de données sans pour autant sortir du cadre de l'invention.

Dans la quatrième étape, l'application logicielle peut être configurée pour informer la BDen soit :
+de l'utilisation du code secret ou du couple code secret et code de suivi de l'étiquette ;
+ d'une invalidation éventuelle dudit code ou desdits codes ; ou
+d'un nombre de tentatives d'utilisation dudit ou desdits codes.

Dans un mode de réalisation préféré, la première étape comporte l'acquisition du code série au moyen d'un terminal portable, et optionnellement du code de suivi, lisibles depuis une face avant de ladite étiquette ; et
la deuxième ou la troisième étape comportent :
- un retrait d'un substrat avant de l'étiquette pour libérer une face avant d'un substrat arrière et une élimination d'un masque couvrant le code secret de manière à le rendre lisible ; et
- l'acquisition du code secret et vérification par l'application logicielle que ledit code secret corresponde au code secret apparié avec le code de suivi dans la base de données BDar.

Ce mode de réalisation convient à des applications dans lequel la vérification du code secret représente l'objectif final du système d'authentification, ce code secret permettant de vérifier l'authenticité d'un produit auquel cette étiquette a été attribuée. Il est aussi possible d'exploiter ce système d'authentification pour la production d'étiquettes d'un jeu de loterie ou un jeu quelconque avec un enjeu économique, dans lequel le système est renforcé contre une fraude potentielle venant des fabricants et des organisateurs du jeu.

Dans une mise en oeuvre alternative du procédé, l'invention propose d'utiliser les étiquettes du système de l'invention pour déployer des solutions logistiques avec des multiples acteurs, notamment d'intégrer un acteur autre que les gérants des bases des données. Plus particulièrement, l'invention propose de configurer l'application logicielle pour envoyer simultanément, lors de la première étape, le code de suivi à un troisième acteur, et lors de la troisième étape, le résultat de l'authentification de l'étiquette est transmis également audit troisième acteur.

Dans ce mode de réalisation, le troisième acteur valide une action suite à l'authentification d'une étiquette, et des données d'identification dudit acte sont enregistrées dans au moins l'une des deux bases de données, associées à au moins l'un des codes de l'étiquette. Par exemple, l'étiquette du système peut être mise à disposition du public et être utilisée comme un timbre pour l'envoi électronique d'un document, ce système permettant de garantir la traçabilité de l'envoi et la réception dudit message.

Il est ainsi proposé un procédé dans lequel l'action validée par le troisième acteur est un envoi électronique d'un document à une personne détentrice d'une étiquette du système à laquelle une fonction de timbre est attribuée, et dans lequel un condensé dudit document est sauvegardé dans l'une de bases de données associée à au moins l'un des codes de l'étiquette.

Dans un mode de réalisation, le système d'authentification comporte une base de données BDst comportant un code statut qui indique que l'étiquette, identifiée par le code série reconnu comme apparié, directement dans la base de données BDen des étiquettes enregistrées a été ou non mise en oeuvre lors d'un premier contrôle, et le procédé de mise en oeuvre du système comporte l'émission d'un message de rejet lorsque ledit code statut indique que ladite étiquette a été mise en oeuvre dans un contrôle antérieur.

### Présentation des dessins

Le système d'authentification de l'invention est décrit de manière détaillée à l'appui d'un exemple non limitatif de la structure d'une étiquette et de ses procédés de réalisation et de mise en oeuvre en référence aux dessins qui représentent de manière non limitative à titre d'exemple :
[Fig 1] Une représentation du système d'authentification de l'invention.
[Fig 1b] Une étiquette suivant le système de l'invention dans un aspect qu'elle présente appliquée sur un produit avant altération ;
[Fig 2a] Une vue éclatée de l'étiquette de la figure 1 montrant un substrat avant
[Fig 2b] Une vue éclatée de l'étiquette de la figure 1 montrant un substrat arrière, qui est assemblé superposé au substrat avant de la figure 2a dans l'étiquette de la figure 1 ;
[Fig 3] Une liste de codes série enregistrés dans la base de données BDav du système de l'invention ;
[Fig 4] Une liste de couples « code secret - code de suivi » enregistrés dans la base de données BDar du système de l'invention ;
[Fig 5] Une représentation schématique d'un procédé de réalisation d'un système d'authentification comportant une étiquette telle que l'étiquette de la figure 1 ;
[Fig. 6] Une représentation schématique d'un procédé de mise en oeuvre du système d'authentification de l'invention.

Sur les figures, les motifs et codes représentés, correspondant à des marquages apposés sur les substrats de l'étiquette, ne sont donnés qu'à titre d'exemples comme support à la description, ces motifs et codes pouvant prendre des aspects très différents dans un groupe d'étiquettes et entre différents groupes d'étiquettes. Le terme « marquage » doit être considéré ici pour la représentation graphique de son contenu, quel que soit le support de l'impression. Ces codes pouvant être imprimés ou bien, présent sous forme d'une puce électronique de type sans contact.

### Description du système d'authentification et d'un exemple d'étiquette

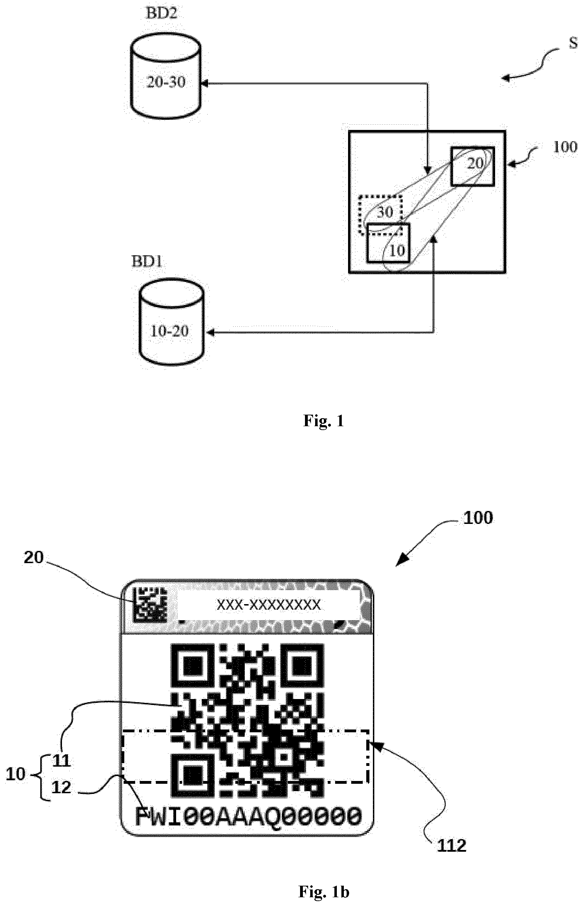

L'invention propose un système d'authentification S (Fig. 1) comportant une étiquette 100 comportant au moins trois codes 10, 20, 30 pour l'identification et la validation d'authenticité de ladite étiquette, caractérisé en ce que le système S comporte :
- au moins deux bases de données indépendantes dans lesquelles sont enregistrés lesdits au moins trois codes,
et en ce que chaque base de données comporte :
- un code inconnu 10, 30 de l'autre base de données
- un code connu 20 de deux bases de données,
- ledit code connu étant apparié avec l'un desdits codes inconnus.

La figure 1b illustre un exemple d'étiquette 100 telle qu'elle est, ou sera, appliquée sur un produit, tel qu'un équipement, un emballage ou un document.

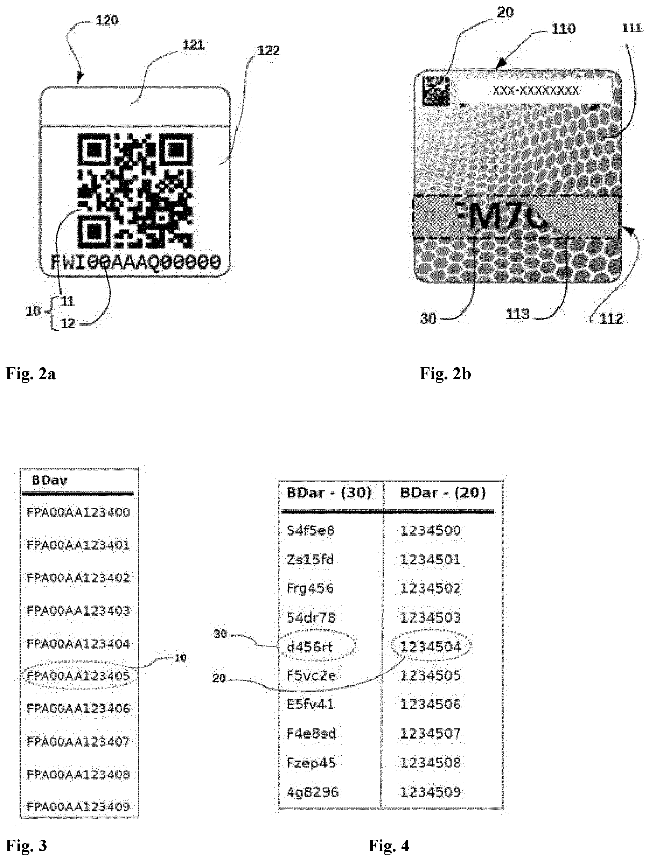

L'étiquette de la figure 1b est le résultat de la superposition, en tout ou partie, d'au moins un substrat arrière 110 et d'un substrat avant 120, comme illustré sur les figures 2a et 2b.

Dans la suite de la description les termes « avant » et « arrière » doivent être compris en relation avec un observateur de l'étiquette qui doit lire l'étiquette, l'avant de l'étiquette se situant du côté de l'observateur, l'arrière se situant à l'opposé.

Dans l'exemple illustré, l'étiquette présente une forme sensiblement carrée. Cette forme simple et classique pour une étiquette n'est cependant pas limitative et l'étiquette peut présenter une forme quelconque pour autant qu'elle ne soit pas incompatible avec les caractéristiques essentielles de l'étiquette de l'invention qui vont être détaillées infra.

Les substrats avant 120 et arrière 110 sont également illustrés avec la forme et les dimensions de l'étiquette 100 bien que ces conditions de formes et de dimensions ne soient pas indispensables comme il sera compris de la suite de la description.

Le substrat avant 120 est situé, par rapport au substrat arrière 110, du côté avant de l'étiquette 100 lorsque ladite étiquette est apposée sur un produit.

Le substrat avant 120 comporte au moins une fenêtre transparente 121, dans l'exemple illustré sous la forme d'une bande en partie supérieure dudit substrat avant, qui, lorsque ledit substrat avant est superposé au substrat arrière 110 dans l'étiquette 100, laisse visible une zone 111 correspondante dudit substrat arrière recouverte par ledit substrat avant.

La fenêtre transparente 121 résulte par exemple de la mise en oeuvre d'un matériau du substrat transparent ou d'une zone du substrat avant sans matériau, par exemple une ouverture ou une encoche dans le substrat avant.

Le substrat avant 120 comporte également au moins une zone de marquage 122 comportant au moins un marquage avant correspondant à un code série 10.

La zone de marquage 122 est distincte de la fenêtre transparente 121.

La zone de marquage 122 peut être transparente en tout ou partie, pour autant que la partie du substrat arrière 110 qui est visible au travers de cette zone de marquages ne nuise pas à la lecture du ou des marquages du substrat avant.

Dans une forme de réalisation, des marquages du substrat avant sont réalisés sur une face avant, donc du côté d'un lecteur de l'étiquette 100 apposée sur un produit, du substrat avant 120.

Dans une autre forme de réalisation, préférée, le substrat avant 120 est transparent dans une zone dudit substrat avant où des marquages sont réalisés sur une face arrière dudit substrat avant. Dans cette forme de réalisation, le cas échéant la face arrière du substrat avant et les marquages réalisés sur cette face sont recouverts, aux emplacements où il est nécessaire ou souhaitable d'améliorer le contraste de lecture des marquages, d'une couche opacifiante pour masquer le substrat arrière 110 et améliorer la lisibilité des marquages dans la zone de marquage 122. Ce mode de réalisation permet de protéger au moyen du substrat avant lui-même les marquages dans la zone de marquage 122 des agressions diverses courantes, mécaniques ou chimiques, qui pourraient effacer accidentellement lesdits marquages.

Dans une autre forme de réalisation, pouvant être combinées à d'autres formes, le code série 10 est contenu dans une puce électronique interrogeable sans contact, e.g. une puce RFID.

Le code série 10 est un indicateur d'un numéro unique de l'étiquette dans une famille d'étiquettes, ce qui implique qu'une seule étiquette de ladite famille d'étiquette est porteuse d'un code série donné.

Le code série 10 peut être présenté sous la forme d'un code alphanumérique 11 et ou sous la forme d'un code graphique 12 tel qu'un code à barre ou un code à deux dimensions, e.g. un QR code, comme illustré sur les figures.

L'utilisation d'un code à deux dimensions permet, de manière connue, d'associer au code série des informations complémentaires, par exemple une information à l'adresse de l'utilisateur du produit portant l'étiquette, par exemple une adresse URL, pouvant être lue au moyen d'un lecteur conventionnel, par exemple un téléphone ordinateur comportant un capteur d'images et comportant un logiciel d'interprétation du code à deux dimensions.

Le code série 10 est généré de manière conventionnelle. Il correspond par exemple à un numéro de l'étiquette dans une série. Il correspond par exemple à un numéro de série du produit sur lequel l'étiquette est, ou sera, apposée. Le code série 10 peut être sérialisé, ou aléatoire.

Le substrat arrière 110 comporte au moins deux zones dont une zone visible 111 et une zone cachée 112.

La zone visible 111 est, dans l'étiquette 100, en vis-à-vis de la fenêtre transparente 121 du substrat avant 120 de sorte qu'un marquage sur le substrat arrière 110 dans ladite zone visible peut être observé depuis la face avant de l'étiquette.

La zone cachée 112 est, dans l'étiquette 100, située sous le substrat avant 120, par exemple sous la zone de marquage 122 dudit substrat avant. Ladite zone cachée est ainsi protégée par le substrat avant 120.

La zone visible 111 du substrat arrière 110 comporte au moins un code de suivi 20, lequel code de suivi est un identifiant unique du substrat arrière 110, ce qui implique qu'une seule étiquette de ladite famille d'étiquette est porteuse d'un code de suivi donné. Le code de suivi 20 peut être sérialisé ou aléatoire.

La zone visible 111 du substrat 110 peut avantageusement intégrer des éléments de sécurité pour permettre l'authentification de l'étiquette. A titre d'exemple le substrat peut être un substrat dit de sécurité avec des fibres ou des bulles, ou bien l'impression peut intégrer des éléments de sécurité tels que des encres ou une métallisation ou une impression sécuritaire.

Le code de suivi 20 de l'étiquette 100 est donc lisible directement à travers la fenêtre transparente 121. Ledit code de suivi peut être lisible par tout moyen adapté à sa représentation. Il peut être intelligible sous la forme d'une chaîne alphanumérique enregistrée. Il peut être lu par des moyens techniques ordinaires, par exemple sous la forme d'un code à barres ou d'un code matriciel à deux dimensions visibles à la lumière blanche, comme illustré sur les figures, ou dans des spectres hors du domaine visible, ultraviolets ou infrarouges.

Il peut également, de manière alternative ou de manière combinée à d'autres forme, être contenu dans une puce électronique à interrogation sans contact, e.g. un composant RFID. Dans ce dernier cas, la transparence du substrat avant 120 est une transparence aux ondes radio-électriques qui autorise la lecture de ladite puce électronique à travers ledit substrat avant.

### Le cas échéant, le code de suivi est crypté.

La zone cachée 112 comporte au moins un code secret 30, lequel est recouvert optionnellement sur une face avant du substrat arrière 110 d'un masque 113, par exemple une encre à gratter, qui rend le code secret 30 invisible même si le substrat avant 120 est transparent ou lorsque ledit substrat avant est retiré de l'étiquette 100. Ce masque est par la suite éliminé pour permettre la lisibilité du code secret. Dans un autre mode de réalisation, le code secret est uniquement caché par la présence du substrat avant superposé audit substrat arrière, et ledit code caché devient lisible lorsque le substrat avant est décollé du substrat arrière.

Le code secret 30 est un code aléatoire, par exemple un code alphanumérique, sans corrélation avec le code de suivi 20 ni avec le code série 10.

Ainsi l'étiquette 100 comporte au moins :
- un code secret 30 optionnellement masqué correspondant à l'un desdits codes inconnus
- un code de suivi 20 unique visible, lisible par transparence dans la fenêtre transparente 121 du substrat avant et correspondant audit code connu par les deux bases de données ;
- un code série 10 unique visible ; et correspondant à l'un desdits codes inconnu

Et les deux bases de données correspondent à :
- une première base de données dans laquelle sont appariés le code série et le code de suivi
- une deuxième base de données dans laquelle sont appariés le code secret avec le code de suivi

Avantageusement, le substrat avant 120 est fixé sur la face avant du substrat arrière 110 au moyen d'un adhésif qui permet le pelage dudit substrat avant sans endommager ledit substrat arrière mais en dégradant suffisamment ledit substrat avant pour qu'il ne soit plus possible de le refixer sur le substrat arrière, au moins sans que cette tentative de reconstruction ne soit manifestement visible.

Dans une forme particulière de réalisation, le code série est imprimé sur le substrat avant 120 pour être dans l'étiquette physiquement superposé au masque 113. Ainsi pour accéder au code secret 30 la destruction du substrat avant 120 conduit également à la destruction du code série 10.

Le code série 10, le code de suivi 20 et le code secret 30 ne peuvent être rapprochés par aucun lien logique, lesdits codes ayant été générés de manière indépendante.

### Description d'un procédé de réalisation du système d'authentification

Un tel résultat est obtenu par un procédé de réalisation 200 d'une étiquette 100 qui comporte la génération des codes série 10, des codes de suivi 20 et des codes secret 30 des étiquettes d'une famille d'étiquettes et la construction de bases de données de contrôle desdits codes.

Dans la description du procédé de réalisation d'une étiquette, il sera considéré que les différents marquages sont imprimés sur les substrats.

Le terme « imprimé » doit être considéré ici au sens large comme toute technique pouvant être mise en oeuvre pour créer des marquages sur un substrat, les techniques en question étant nombreuses et variées sans que le choix d'une technique particulière soit critique dans le contexte de l'invention.

Il ne sera pas non plus détaillé le type de matériaux mis en oeuvre pour les substrats avant et arrière qui peuvent être de toutes nature, en particulier des polymères, compatibles avec l'utilisation prévue des étiquettes et avec les exigences propres du présent procédé.

A titre d'exemple, les codes sont imprimés avec des presses numériques ou des têtes d'impression jet d'encre. Les matériaux sont par exemple des papiers ou des films polymères en fonction des contraintes techniques du produit à marquer.

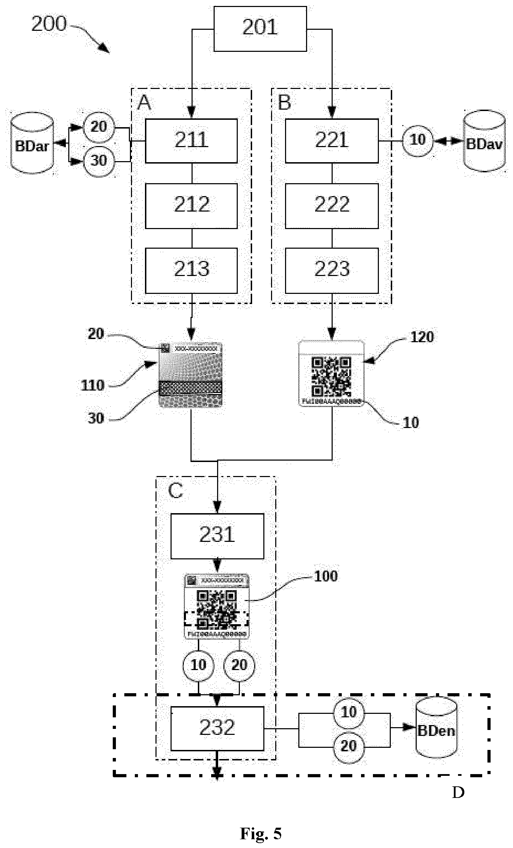

Suivant le procédé de réalisation 200, schématisé sur la figure 5, le substrat avant 120 et le substrat arrière 110 d'une étiquette 100 sont réalisés indépendamment l'un de l'autre. De façon préférentielle, pour des réalisations en grandes séries, les substrats 110 et 120 sont imprimés en deux bobines individuelles indépendantes aux pas identiques puis les deux bobines sont ensuite assemblées par adhésivage de la bobine avant 120 sur la bobine arrière 110 de façon à bien laisser apparaître le code suivi 20 pour chaque étiquette. L'ensemble forme une troisième bobine porteuse des étiquettes 100. La BDen de chaque étiquette de la bobine finale assemblée est ensuite réalisée en série en soumettant cette bobine assemblée à un déroulement devant un système de capture à grande vitesse qui va lire et lier chaque code série 10 à chaque code suivi 20.

Par indépendamment, il faut comprendre qu'il n'y a pas pour réaliser le substrat avant et le substrat arrière d'exigence d'unité de temps, ni d'unité de lieu, ni d'unité d'acteur. Seule la structure des substrats est imposée par la nécessité de les assembler de manière précise lors de la réalisation de l'étiquette en assurant la lisibilité des codes devant être utilisés lors de l'utilisation de l'étiquette.

Dans une étape préliminaire 201, la structure des étiquettes d'une famille d'étiquettes à imprimer est définie. Dans cette étape préliminaire, les dimensions des étiquettes 100 et des substrats avant 120 et arrière 110 sont définies ainsi que les emplacements des différents marquages sur lesdits substrats avant et arrière, ainsi que l'emplacement et les dimensions de la fenêtre transparente sur le substrat avant.

Dans une étape A, le substrat arrière 110 est réalisé.

Dans une étape d'identification 211 de l'étape A, au moins un code de suivi 20 unique et au moins un code secret 30 sont définis pour le substrat arrière 110, et les dits au moins un code de suivi et au moins un code secret sont appariés dans une base de données BDar des substrats arrière, illustrée sur la figure 4.

Dans une forme de mise en oeuvre, la base de données BDar est générée préalablement avec une liste de codes de suivi et codes secrets à utiliser et chaque code série et un code secret auquel il est apparié sont attribués à un seul substrat arrière.

Dans une étape d'impression 212 de l'étape A, les marquages, au moins le code suivi 20 et le code secret 30, sont imprimés sur la face avant du substrat arrière 110 dans les formes et aux emplacements définis dans l'étape préliminaire 201.

Dans une étape de masquage 213 de l'étape A, le code secret 10 est recouvert du masque 113 pour être non visible sauf à retirer ledit masque.

Dans une étape B, indépendante de l'étape A, le substrat avant 120 est réalisé.

Dans une étape de sérialisation 221 de l'étape B, au moins un code série 10 unique est défini pour le substrat avant 120 et mémorisé dans une base de données BDav, illustrée sur la figure 3. Dans une forme de mise en oeuvre, la base de données BDav peut-être générée préalablement avec une liste de codes série à utiliser et chaque code série est attribué à un seul substrat avant lors de la réalisation des substrats avant.

Dans une étape d'impression 222 de l'étape B, au moins le code série 10 est imprimé sur le substrat avant 120 dans la ou les formes et aux emplacements définis lors de l'étape préliminaire 201.

Comme il a déjà été précisé, l'étape A de réalisation du substrat arrière et l'étape B de réalisation du substrat avant peuvent être exécutées indépendamment l'une de l'autre, en particulier à des moments différents et en des lieux différents.

Dans une étape C, postérieure aux étapes A et B, l'étiquette est formée.

Dans une étape d'assemblage 231 de l'étape C, le substrat avant 120 est fixé superposé au substrat arrière 110 dans l'agencement défini lors de l'étape préliminaire 201.

Il doit être noté que pour la réalisation de lots d'étiquettes d'une même famille, il est en pratique réalisé d'une part un nombre nécessaire de substrats arrière et d'autre part un nombre nécessaire de substrats avant, et que lors de l'étape d'assemblage 231, un substrat avant est superposé à un substrat arrière sans considérations de leurs codes série et de leurs codes de suivi respectifs. Comme évoqué précédemment, un conditionnement en bobines est préférable.

Suivant un mode de mise en oeuvre, non illustré sur les figures, dans l'étape d'enregistrement le code série 10 et le code suivi 20 lus sur l'étiquette sont appariés dans la base de données BDen des étiquettes enregistrées sans que le code secret 30 soit connu de ladite étape d'enregistrement.

Cette étape d'enregistrement est avantageusement réalisée par un dispositif d'enregistrement, non représenté sur les figures, qui lit automatiquement le code série et le code de suivi de l'étiquette 100 pour les enregistrer appariés dans la base de données BDen.

La base de données BDen peut être créée lors de l'étape d'enregistrement ou résulter d'un enrichissement de la base de données BDav.

L'étape C, nécessairement postérieure aux étapes A et B de réalisation des substrats avant et arrière, peut être réalisée indépendamment, en particulier en des lieux différents et par des opérateurs différents.

Après l'issue de l'étape C, l'étiquette 100 est prête à être apposée sur un produit et mise en oeuvre.

De manière avantageuse, chaque base de données BDar, BDen est construite, modifiée et gérée de manière indépendante à l'autre base de données. L'accès et la modification de chaque base de données comportera donc un accès sécurisé spécifique pour ladite base de données. L'autorisation d'accéder à l'une base de données n'implique pas une autorisation d'accéder à la deuxième base de données.

Ce système est très avantageux car le protocole de confidentialité et d'accès autorisé à chaque base de données sera moins contraignant que le protocole requis lorsqu'une seule base de données contient toutes les informations nécessaires pour envisager une fraude du système.

### Mise en œuvre de l'étiquette

Le système de l'invention est mis en oeuvre 300 pour contrôler les étiquettes et détecter un marquage d'un produit par une étiquette frauduleuse où l'utilisation frauduleuse des codes d'une étiquette.

Par son principe une étiquette 100 comporte au moins un code série lisibles sans altérer ladite étiquette et au moins un code secret caché qui ne devient lisible qu'en altérant définitivement l'étiquette, ledit code série et ledit code secret étant imprimés sur des substrats différents de la même étiquette et appairés dans une base de données.

Il en résulte qu'une étiquette 100 ne peut être reconnue avec certitude que par la connaissance desdits aux moins un code série et un code secret, ce qui pour ce dernier nécessite de détruire l'intégrité physique de ladite étiquette.

Les différentes étapes de cette mise en oeuvre sont par exemple réalisées au moyen d'un terminal portable ou téléphone-ordinateur qui se connecte à distance à un serveur, non représenté sur les figures, en charge de réaliser les différentes vérifications en interrogeant les bases de données auxquelles ledit serveur a les capacités d'accès nécessaires.

De manière avantageuse l'invention propose d'attribuer la gestion des deux bases de données BDar, BDen à des acteurs différents, et d'interroger lesdites bases de données au moyen d'une application logicielle pouvant être accédée au moyen d'une lecture du code de série 10, et optionnellement le code de suivi 20 par un terminal portable lors d'une première étape dudit procédé.

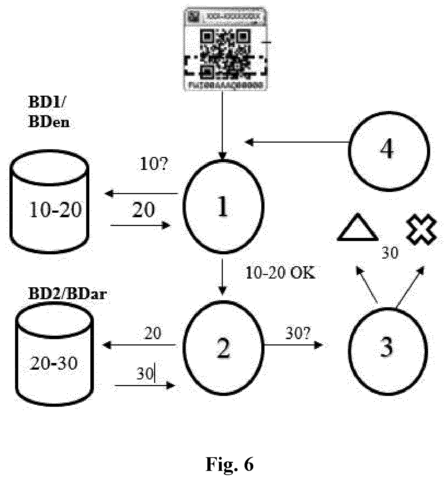

Plus particulièrement dans une première étape (Fig. 6), ladite application logicielle est configurée pour interroger la première base de données BDen et vérifier si ledit code de série et le code de suivi sont présents et couplés, ladite base de données BDen étant gérée par un premier acteur qui atteste de sa liberté d'utilisation ou de son invalidité.

Lors d'une deuxième étape, l'application logicielle interroge la deuxième base de données BDar au moyen du code de suivi (20) pour obtenir le code secret apparié audit code de suivi (20), ladite deuxième base de données étant gérée par un deuxième acteur.

Dans une troisième étape une étiquette est authentifiée lorsque le code secret transmis par la base de données de substrat arrière corresponde au code secret lu sur l'étiquette.

Dans une quatrième étape la BDen informe la BDar de l'utilisation de l'étiquette et de son invalidation éventuelle ou d'une poursuite pour N utilisations. Ainsi il est à noter que le système physique de l'étiquette et logiciel permet une utilisation en boucle fermée.

Par acteur on entend toute personne physique ou morale ayant en charge la gestion de la base de données ou au moins ayant un accès autorisé à des informations obtenues desdites bases de données. Cet acteur est par exemple le titulaire de droits d'un produit à authentifier, ou des étiquettes ayant une valeur commerciale en soit même ou permettant l'accès à un service, soit un tiers de confiance du titulaire de droits, soit le fournisseur du service associé à l'étiquette etc.

Suivant un mode de mise en oeuvre du système d'authentification spécifique à l'étiquette 100, la base de données BDen des étiquettes enregistrées comporte le code série 10 et le code de suivi 20 appariés, le procédé comporte une étape de vérification par interrogation de la base des données BDar des substrats arrière que le code secret 30 lu sur l'étiquette, après retrait du substrat avant 120 et élimination du masque 113 pour rendre ce dernier lisible sur l'étiquette, correspond effectivement au code secret apparié dans la dite base de données BDar au code de suivi de ladite étiquette.

Ainsi suivant ce mode de mise en oeuvre, il est procédé aux actions de :
Lors de la première étape ;
   - lecture du code série 10, et optionnellement du code suivi 20 de l'étiquette ;
   - interrogation de la base de données BDen des étiquettes enregistrées pour vérifier que ledit code série et ledit code de suivi sont enregistrés appariés dans ladite base de données BDen et libre d'utilisation ;
Lors de la deuxième ou troisième étape
   - retrait du substrat avant 120 de la face avant du substrat arrière 110 et élimination du masque 113 pour rendre lisible le code secret 30 ;
Lors de la troisième étape
   - lecture dudit code secret et interrogation de la base de données BDar des substrats arrière pour vérifier que ledit code de suivi, et indirectement le code série 10, et ledit code secret sont appariés dans ladite base de données BDar, et émission d'un message de rejet si ce n'est pas le cas.

Le système peut mettre en oeuvre un système de vérification dans une base BDst d'un code statut indiquant si l'étiquette 100 a été mise en oeuvre antérieurement lors d'un contrôle.

Un tel code statut correspond par exemple à un indicateur binaire « utilisé/non utilisé » initialisé à la valeur « non utilisé » pour chaque l'étiquette identifiée par son code série et ou son code de suivi. Lors de la vérification du code statut de l'étiquette 100 :
+ si le code statut correspond à « utilisé », émission d'un message de rejet ;
+ si le code statut correspond à « non utilisé », émission d'un message d'acceptation et passage dudit code statut de « non utilisé » à « utilisé ».

Avantageusement les codes statut sont enregistrés dans la base de données BDen des étiquettes enregistrées et la base de données BDst correspond dans ce cas à un sous-ensemble de la base de données BDen.

### Application

Une telle étiquette permet de mettre en oeuvre un code secret de manière sécurisée sans pour autant utiliser de technologies coûteuses, ou des protocoles de confidentialité contraignants lors de la réalisation des étiquettes et des bases de données, ce qui permet une utilisation extensive des étiquettes, y compris sur des produits de faible valeur.

La difficulté à reproduire une telle étiquette peut en outre être augmentée en mettant en oeuvre des solutions du type marqueurs non reproductibles, par exemple comportant des fibres colorées ou des bulles emprisonnées dans un matériau transparent, et des solutions de cryptage des codes. L'invention permet ainsi de vérifier l'authenticité d'une étiquette apposée sur un produit, le droit d'un utilisateur à détenir un produit ou d'accéder à des fonctions associées ou encore d'assurer une traçabilité d'un produit.

Hors la connaissance de bases de données d'enregistrement des étiquettes, seule la présence simultanée de ces trois codes sur l'étiquette 100 les relie et un utilisateur indélicat ne peut pas, à partir d'une étiquette, créer une étiquette similaire avec la certitude que l'étiquette correspondent à une étiquette réelle, sauf une étiquette identique dont la contrefaçon sera détectée lors de la mise en oeuvre de l'étiquette.

Dans un autre mode de mise en oeuvre du système d'authentification, l'invention propose de déployer des solutions logistiques au moyen du système d'authentification de l'invention, tel que contrôler l'accès à une fonction ou service d'un troisième acteur n'ayant pas un lien direct avec la réalisation de l'étiquette et des bases de données. Par exemple, l'invention propose d'utiliser les étiquettes du système comme un timbre pour accéder à un service de transmission sécurisée et traçable d'un document électronique, par exemple pour attester de l'envoi et la réception d'un document à caractère officiel entre un particulier et une entité privée ou publique.

Dans ce mode de réalisation, la fonction de timbre est intégrée à l'étiquette de l'invention au moyen du code de suivi ou du code série comportant également des données permettant à l'application logicielle de rentrer en contact avec le troisième acteur, tel que ladite entité publique ou privée. L'application logicielle informe également au troisième acteur du résultat de contrôle de l'étiquette. Le troisième acteur, procédera donc à l'envoi du document au particulier suite à un contrôle positif de l'étiquette.

De manière avantageuse, l'invention propose d'enregistrer un condensé du document transmis dans au moins l'une des bases de données BD1, BD2, BDar, BDen, de manière à garder une traçabilité du document transmis associé à l'utilisation d'une étiquette, en associant dans la base de données un condensé de document à l'un des codes 10, 20, 30 de l'étiquette. Par condensé on entend les informations essentielles pour assurer la traçabilité de l'envoi et la réception dudit document, et les informations essentielles pour identifier le contenu du document, soit une version compressée dudit document, voir le document transmis.

Le particulier pourra également coller l'étiquette sur une impression dudit document transmis, ladite étiquette faisant fois de l'authenticité dudit document et permettant de corroborer par la suite l'acte de transmission dudit document ainsi que son intégrité.

Dans un autre mode de réalisation non illustré, il sera possible pour un particulier d'imprimer sa propre étiquette, cette étiquette comportant uniquement le code de série unique et le code de suivi unique. Dans ce mode de réalisation le code secret n'est pas mis à disposition de public et peut être uniquement consulté et vérifié au moyen du code de suivi apparié audit code secret dans la base de données BDar. La troisième étape de vérification est donc uniquement validée lorsque l'application logicielle confirme l'existence du code de suivi apparié dans la deuxième base de données à un code secret, et confirme un statut disponible dudit couple de code secret et code de suivi.

L'exemple de timbre n'est pas limitatif mais il montre comment l'étiquette et le procédé objet de l'invention permettent de créer une chaîne de confiance physique et numérique dans le suivi, la délivrance et l'intégrité d'informations et d'objets. Ce timbre constitue ainsi un composant physique imprimé de sécurité numérique qui a une vocation d'utilisation universelle dans un univers numérique pour construire des solutions connectées de traçabilité, d'authentification, de preuve d'intégrité et de conservation des preuves. Ainsi cette invention est particulièrement appropriée au marquage des objets pour toutes les applications faisant appel à une blockchain.

## Revendications

1. Un système d'authentification comportant une étiquette présentant au moins trois codes (10, 20, 30) pour l'identification et la validation d'authenticité de ladite étiquette, **caractérisé en ce que** le système comporte :
- au moins deux bases de données BD (BD1, BD2) indépendantes dans lesquelles sont enregistrés lesdits au moins trois codes,
et **en ce que** chaque base de données BD (BD1, BD2) comporte :
- un code inconnu (10, 30) de l'autre base de données,
- un code connu (20) de deux bases de données,
- ledit code connu (20) apparié avec l'un desdits codes inconnus (10, 30).

2. Système d'authentification suivant la revendication 1, dans lequel les au moins trois codes correspondent à :
- un code secret (30) caché ou masqué correspondant à un premier code dit inconnu et présent uniquement sur l'une des bases de données
- un code de suivi (20) unique visible et correspondant au code dit connu de deux bases de données ;
- un code série (10) visible et correspondant à un deuxième code dit inconnu et présent uniquement sur l'une des bases de données ;
et les deux bases de données correspondent à :
- une première base de données (BD1) dans laquelle sont appariés le code série (10) et le code de suivi (20)
- une deuxième base de données (BD2) dans laquelle sont appariés le code secret (30) avec le code de suivi (20).

3. Système d'authentification suivant l'une des revendications précédentes, dans lequel ladite étiquette comporte deux substrats superposés :
- un substrat arrière comportant le code secret (30) et le code de suivi (20) appariés dans ladite deuxième base de données correspondant à une « base de données de substrats arrière » (BDar),
- un substrat avant, superposé audit substrat arrière et déterminant une face avant de lecture de l'étiquette, ledit substrat avant comportant le code série (10) et étant superposé au substrat arrière de manière à permettre la lisibilité du code de suivi (20) et à cacher le code secret (30),
et dans lequel système le code série (10) et le code de suivi (20) sont appariés dans la première base de données correspondant à une base de données d'étiquettes enregistrées (BDen).

4. Procédé de réalisation d'un système d'authentification suivant l'une des revendications précédentes comportant :
- une étape A de réalisation d'un substrat arrière (110) d'étiquette comportant les étapes :
+ d'impression sur ledit substrat arrière d'un code suivi (20) et d'un code secret (30) ;
+ de dépôt optionnel d'un masque (113) sur le code secret (30) ;
+ d'appariement du code de suivi (20) et du code secret (30), dans une base de données (BDar) des substrats arrière ;
- une étape B, indépendante de l'étape A, de réalisation d'un substrat avant (120), comportant l'impression d'un code série (10) unique,
- une étape C de formation de l'étiquette (100), comportant les étapes :
+d'assemblage du substrat avant (120) sur la face avant du substrat arrière (110), de sorte que le code secret (30) se trouve recouvert par ledit substrat avant et de sorte que le code de suivi (20) reste visible depuis la face avant de l'étiquette ;
+ de lecture du code série (10) et du code de suivi (20) de l'étiquette (100) ;
- une étape D d'enregistrement de l'étiquette (100) dans laquelle étape d'enregistrement le code série (10) de l'étiquette et le code de suivi (20) sont appariés dans une base de données (BDen) des étiquettes enregistrées ;
et dans lequel procédé chaque base de données (BDar, BDen) est construite, modifiée et gérée de manière indépendante à l'autre base de données.

5. Procédé suivant la revendication 4 comportant en outre une étape préliminaire dans laquelle sont définis des attributs d'une famille d'étiquettes à laquelle appartient l'étiquette (100), lesdits attributs comportant des dimensions du substrat avant (120) et du substrat arrière (110) et les emplacements des différents marquages dont le code série (10), le code de suivi (20) et le code secret (30).

6. Procédé suivant la revendication 4 ou la revendication 5 dans lequel au moins deux étapes parmi l'étape A de réalisation d'un substrat arrière, l'étape B de réalisation d'un substrat avant et l'étape C de formation de l'étiquette sont mises en oeuvre à des moments différents, et ou en des lieux différents et ou par des opérateurs différents.

7. Procédé suivant l'une des revendications 4 à 6 dans lequel lors de l'assemblage du substrat avant (120) sur la face avant du substrat arrière (110) dans l'étape C de formation de l'étiquette (100) le code de suivi (20) dudit substrat arrière n'est pas recouvert par ledit substrat avant ou est visible à travers une fenêtre transparente (121) dudit substrat avant et dans lequel :
- le code série (10) est imprimé sur le substrat avant (120) pour être physiquement superposé au code secret (30) dans l'étiquette et de sorte que l'accès audit code secret entraîne la destruction du marquage dudit code série.

8. Procédé suivant l'une des revendications 4 à 7 dans lequel tout ou partie des marquages du substrat avant (120) est réalisé sur une face arrière dudit substrat avant dans une zone transparente dudit substrat avant pour être lisible en vitrauphanie depuis la face avant dudit substrat avant.

9. Procédé suivant l'une des revendications 4 à 8 dans lequel le code série (10) est incorporé dans tout ou partie d'une chaîne de caractères alphanumériques, d'un code à barres, d'un code à deux dimensions (11), d'une puce électronique à lecture sans contact.

10. Procédé suivant l'une des revendications 4 à 9 dans lequel le code série (10) et le code de suivi (20) sont incorporés dans un code à deux dimensions (11) et ou une puce électronique à lecture sans contact, ledit code de suivi (20) comportant également une url de connexion à un service de vérification de l'authenticité de l'étiquette.

11. Procédé de mise en oeuvre d'un système d'authentification suivant l'une des revendications 1 à 3 comportant :
- une première étape d'accès à une application logicielle au moyen de l'acquisition d'un code série, ladite application logicielle étant configurée pour interroger une première base de données (BD1, BDen) et vérifier ledit code de série et un code de suivi appariés dans la base de données (BD1, BDen) et leurs disponibilité d'utilisation, ladite première base de données étant gérée par un premier acteur ;
- une deuxième étape, effectuée suite à une vérification positive lors de la première étape, dans laquelle l'application logicielle interroge une deuxième base de données (BD2, BDar) au moyen du code de suivi (20) pour obtenir un code secret apparié audit code de suivi (20), ladite deuxième base de données étant gérée par un deuxième acteur,
- une troisième étape dans laquelle une étiquette est authentifiée lorsque le code secret transmis par la base de données de substrat arrière (BDar) corresponde au code secret lu sur l'étiquette ;
- une quatrième étape dans laquelle l'application logicielle informe la première base de données (BD1, BD2) de l'utilisation du code secret (30).

12. Procédé de mise en oeuvre d'un système d'authentification suivant la revendication 11 dans lequel :
la première étape comporte l'acquisition du code série (10) au moyen d'un terminal portable, et optionnellement du code de suivi (20), lisibles depuis une face avant de ladite étiquette ; et
la deuxième ou la troisième étape comportent :
- un retrait d'un substrat avant (120) de l'étiquette (100) pour libérer une face avant d'un substrat arrière (110) et le cas échéant, une élimination d'un masque (113) optionnel couvrant le code secret (30) de manière à le rendre lisible;
- acquisition du code secret (30) et vérification par l'application logicielle que ledit code secret (30) corresponde au code secret apparié avec le code de suivi (20) dans la base de données (BDar).

13. Procédé de mise en oeuvre d'un système d'authentification suivant la revendication 11 ou 12, dans lequel lors de la première étape l'application logiciel est configurée pour envoyer simultanément, le code de suivi (20) à un troisième acteur, et lors de la troisième étape :
- l'application logicielle est configurée pour transmettre le résultat de l'authentification de l'étiquette audit troisième acteur ou;
- l'application logicielle est configurée pour transmettre le code secret de la deuxième base de données du substrat arrière (BD2, BDar) et le code secret lu sur l'étiquette pour que ledit troisième acteur valide l'authentification de ladite étiquette.

14. Procédé de mise en oeuvre d'un système d'authentification suivant la revendication 13, dans lequel le troisième acteur valide une action suite à l'authentification d'une étiquette, et des données d'identification dudit acte sont enregistrées dans au moins l'une des deux bases de données (BD1, BDen, BD2, BDar) associées à au moins l'un des codes de l'étiquette.

15. Procédé de mise en oeuvre d'un système d'authentification suivant la revendication 13, dans lequel l'action validée par le troisième acteur est un envoi électronique d'un document à une personne détentrice d'une étiquette du système, et un condensé du document est sauvegardé dans l'une de bases de données (BD1, BDen, BD2, BDar) associée à au moins l'un des codes de l'étiquette (10, 20, 30).

16. Procédé suivant la revendication 11 à 15 dans lequel une base de données (BDst) comporte un code statut indiquant que l'étiquette (100), identifiées par le code série (10) reconnu comme apparié, directement dans la base de données (BDen) des étiquettes enregistrées a été ou non mise en oeuvre lors d'un premier contrôle, et comportant en outre une étape de vérification du code statut de l'étiquette (100) dans la base de données (BDst) et dans lequel un message de rejet est émis lorsque ledit code statut indique que ladite étiquette a été mise en œuvre dans un contrôle antérieur.

## Patentansprüche

1. Authentifizierungssystem, ein Etikett beinhaltend, das mindestens drei Codes (10, 20, 30) zur Identifizierung und Validierung der Authentizität des Etiketts aufweist, **dadurch gekennzeichnet, dass** das System beinhaltet:
- mindestens zwei unabhängige Datenbanken BD (BD1, BD2), in denen die mindestens drei Codes gespeichert sind,
und dass jede Datenbank BD (BD1, BD2) beinhaltet:
- einen unbekannten Code (10, 30) aus der anderen Datenbank,
- einen bekannten Code (20) aus den zwei Datenbanken,
- wobei der bekannte Code (20) mit einem der unbekannten Codes (10, 30) abgeglichen ist.

2. Authentifizierungssystem nach Anspruch 1, wobei die mindestens drei Codes entsprechen:
- einem verborgenen oder maskierten Geheimcode (30), der einem ersten Code, unbekannt genannt, entspricht, und nur in einer der Datenbanken vorhanden ist;
- einem sichtbaren eindeutigen Nachverfolgungscode (20), der dem bekannten Code der zwei Datenbanken entspricht;
- einem sichtbaren Seriencode (10), der einem zweiten Code, unbekannt genannt, entspricht, und nur in einer der Datenbanken vorhanden ist;
und den zwei Datenbanken, die entsprechen:
- einer ersten Datenbank (BD1), in der der Seriencode (10) und der Nachverfolgungscode (20) abgeglichen sind;
- einer zweiten Datenbank (BD2), in der der Geheimcode (30) mit dem Nachverfolgungscode (20) abgeglichen ist.

3. Authentifizierungssystem nach einem der vorhergehenden Ansprüche, wobei das Etikett zwei übereinanderliegende Substrate beinhaltet:
- ein hinteres Substrat, das den Geheimcode (30) und den Nachverfolgungscode (20) beinhaltet, die in der zweiten Datenbank, die einer "Datenbank des hinteren Substrats" (BDar) entspricht, abgeglichen sind,
- ein vorderes Substrat, das über dem hinteren Substrat liegt, und eine vordere Seite der Ablesung des Etiketts bestimmend, wobei das vordere Substrat den Seriencode (10) beinhaltet und so über dem hinteren Substrat liegt, dass die Lesbarkeit des Nachverfolgungscodes (20) ermöglicht wird, und der Geheimcode (30) verborgen wird,
und wobei im System der Seriencode (10) und der Nachverfolgungscode (20) in der ersten Datenbank abgeglichen sind, die einer Datenbank gespeicherter Etiketten (BDen) entspricht.

4. Herstellungsverfahren eines Authentifizierungssystems nach einem der vorhergehenden Ansprüche, beinhaltend:
- einen Schritt A zur Herstellung eines hinteren Etikettensubstrats (110), die Schritte beinhaltend:
+ des Aufdruckens auf das hintere Substrat eines Nachverfolgungscodes (20) und eines Geheimcodes (30);
+ der optionalen Ablagerung einer Maske (113) auf dem Geheimcode (30);
+ des Abgleichs des Nachverfolgungscodes (20) und des Geheimcodes (30) in einer Datenbank (BDar) der hinteren Substrate;
- einen Schritt B, unabhängig von Schritt A, zur Herstellung eines vorderen Substrats (120), das Aufdrucken eines eindeutigen Seriencodes (10) beinhaltend,
- einen Schritt C zur Bildung des Etiketts (100), der die Schritte beinhaltet:
+ der Montage des vorderen Substrats (120) auf der vorderen Seite des hinteren Substrats (110), so dass der Geheimcode (30) vom vorderen Substrat bedeckt ist und der Nachverfolgungscode (20) von der vorderen Seite des Etiketts aus sichtbar bleibt;
+ der Ablesung des Seriencodes (10) und des Nachverfolgungscodes (20) des Etiketts (100);
- einen Schritt D der Speicherung des Etiketts (100), wobei im Schritt der Speicherung der Seriencode (10) des Etiketts und der Nachverfolgungscode (20) in einer Datenbank (BDen) der gespeicherten Etiketten abgeglichen werden;
und wobei im Verfahren jede Datenbank (BDar, BDen) unabhängig von der anderen Datenbank konstruiert, modifiziert und verwaltet wird.

5. Verfahren nach Anspruch 4, ferner einen einleitenden Schritt beinhaltend, wobei die Attribute einer Etikettenfamilie definiert werden, zu der das Etikett (100) gehört, wobei die Attribute Abmessungen des vorderen Substrats (120) und des hinteren Substrats (110) beinhalten, und die Positionen der verschiedenen Markierungen einschließlich des Seriencodes (10), des Nachverfolgungscodes (20) und des Geheimcodes (30).

6. Verfahren nach Anspruch 4 oder Anspruch 5, wobei mindestens zwei Schritte von dem Schritt A zur Herstellung eines hinteren Substrats, dem Schritt B zur Herstellung eines vorderen Substrats und dem Schritt C zur Bildung des Etiketts zu verschiedenen Zeitpunkten oder an verschiedenen Orten und oder von verschiedenen Bedienern implementiert werden.

7. Verfahren nach einem der Ansprüche 4 bis 6, wobei während der Montage des vorderen Substrats (120) auf der vorderen Seite des hinteren Substrats (110) in Schritt C des Bildens des Etiketts (100) der Nachverfolgungscode (20) des hinteren Substrats entweder nicht vom vorderen Substrat bedeckt ist oder durch ein transparentes Fenster (121) des vorderen Substrats hindurch sichtbar ist und wobei:
- der Seriencode (10) auf dem vorderen Substrat (120) aufgedruckt wird, um physisch über dem Geheimcode (30) im Etikett zu liegen, und so dass der Zugriff auf den Geheimcode zur Zerstörung der Markierung des Seriencodes führt.

8. Verfahren nach einem der Ansprüche 4 bis 7, wobei alle oder ein Teil der Markierungen des vorderen Substrats (120) auf einer hinteren Seite des vorderen Substrats in einem transparenten Bereich des vorderen Substrats hergestellt wird, um von der vorderen Seite des vorderen Substrats aus als Fensteraufkleber lesbar zu sein.

9. Verfahren nach einem der Ansprüche 4 bis 8, wobei der Seriencode (10) ganz oder teilweise eingebettet ist in eine alphanumerische Zeichenkette, einen Barcode, einen zweidimensionalen Code (11), einen elektronischen Chip zur berührungslosen Ablesung.

10. Verfahren nach einem der Ansprüche 4 bis 9, wobei der Seriencode (10) und der Nachverfolgungscode (20) in einen zweidimensionalen Code (11) und/oder einen elektronischen Chip zur berührungslosen Ablesung eingebettet sind, wobei der Nachverfolgungscode (20) auch eine URL der Verbindung zu einem Überprüfungsdienst der Authentizität des Etiketts beinhaltet.

11. Verfahren zur Implementierung eines Authentifizierungssystems nach einem der Ansprüche 1 bis 3, beinhaltend:
- einen ersten Schritt des Zugriffs auf eine Softwareanwendung mittels Erwerb eines Seriencodes, wobei die Softwareanwendung konfiguriert ist, um eine erste Datenbank (BD1, BDen) abzufragen, und den Seriencode und einen Nachverfolgungscode zu überprüfen, die in der Datenbank (BD1, BDen) abgeglichen sind, und ihre Verwendungsverfügbarkeit, wobei die erste Datenbank von einem ersten Aktor verwaltet wird;
- einen zweiten Schritt, der nach einer positiven Überprüfung während des ersten Schritts durchgeführt wird, wobei die Softwareanwendung eine zweite Datenbank (BD2, BDar) mittels dem Nachverfolgungscode (20) abfragt, um einen Geheimcode zu erhalten, der mit dem Nachverfolgungscode (20) abgeglichen ist, wobei die zweite Datenbank von einem zweiten Aktor verwaltet wird;
- einen dritten Schritt, wobei ein Etikett authentifiziert wird, wenn der Geheimcode, der von der Datenbank des hinteren Substrats (BDar) übertragen wird, dem Geheimcode entspricht, der auf dem Etikett abgelesen wurde;
- einen vierten Schritt, wobei die Softwareanwendung die erste Datenbank (BD1, BD2) über die Verwendung des Geheimcodes (30) informiert.

12. Verfahren zur Implementierung eines Authentifizierungssystems nach Anspruch 11, wobei:
Der erste Schritt den Erwerb des Seriencodes (10) mittels eines tragbaren Terminals beinhaltet, und optional des Nachverfolgungscodes (20), der von einer vorderen Seite des Etiketts aus lesbar ist; und
der zweite oder dritte Schritt beinhaltend:
- ein Entfernen eines vorderen Substrats (120) vom Etikett (100) um eine vordere Seite eines hinteren Substrats (110) freizulegen, und gegebenenfalls eine Beseitigung einer optionalen Maske (113), die den Geheimcode (30) überdeckt, um ihn lesbar zu machen;
- Erwerb des Geheimcodes (30) und Überprüfung durch die Softwareanwendung, ob der Geheimcode (30) dem Geheimcode entspricht, der mit dem Nachverfolgungscode (20) in der Datenbank (BDar) abgeglichen wurde.

13. Verfahren zur Implementierung eines Authentifizierungssystems nach Anspruch 11 oder 12, wobei während dem ersten Schritt die Softwareanwendung konfiguriert wird, um gleichzeitig den Nachverfolgungscode (20) an einen dritten Aktor zu senden, und während dem dritten Schritt:
- die Softwareanwendung konfiguriert wird, um das Ergebnis der Etikettenauthentifizierung an den dritten Aktor zu übertragen oder;
- die Softwareanwendung konfiguriert wird, um den Geheimcode der zweiten Datenbank des hinteren Substrats (BD2, BDar) und den Geheimcode, der auf dem Etikett abgelesen wurde, zu übertragen, damit der dritte Aktor die Authentifizierung des Etiketts validiert.

14. Verfahren zur Implementierung eines Authentifizierungssystems nach Anspruch 13, wobei der dritte Aktor nach der Authentifizierung eines Etiketts eine Aktion validiert, und Identifizierungsdaten dieses Aktes in mindestens einer der zwei Datenbanken (BD1, BDen, BD2, BDar) gespeichert werden, die mindestens einem der Codes des Etiketts zugeordnet sind.

15. Verfahren zur Implementierung eines Authentifizierungssystems nach Anspruch 13, wobei die Aktion, die vom dritten Aktor validiert wurde, ein elektronisches Senden eines Dokuments an eine Person ist, die ein Etikett des Systems besitzt, und eine Komprimierung des Dokuments in einer Datenbank (BD1, BDen, BD2, BDar) abgespeichert wird, die mindestens einem der Codes des Etiketts (10, 20, 30) zugeordnet ist.

16. Verfahren nach Anspruch 11 bis 15, wobei eine Datenbank (BDst) einen Statuscode beinhaltet, der angibt, dass das Etikett (100), das durch den Seriencode (10) identifiziert wird und direkt in der Datenbank (BDen) der gespeicherten Etiketten als abgeglichen erkannt wird, während einer ersten Prüfung implementiert wurde oder nicht, und ferner einen Schritt zur Überprüfen des Statuscodes des Etiketts (100) in der Datenbank (BDst) beinhaltet, und wobei eine Ablehnungsnachricht ausgegeben wird, wenn der Statuscode anzeigt, dass das Etikett in einer früheren Prüfung implementiert wurde.

## Claims

1. An authentication system including a label having at least three codes (10, 20, 30) for identifying and validating the authenticity of said label, **characterised in that** the system includes:
- at least two independent databases BD (BD1, BD2) in which said at least three codes are entered,
and **in that** each database BD (BD1, BD2) includes:
- an unknown code (10, 30) from the other database,
- a known code (20) from two databases,
- said known code (20) paired with one of said unknown codes (10, 30).

2. The authentication system according to claim 1, wherein the at least three codes correspond to:
- a hidden or masked secret code (30) corresponding to a first code called unknown code and present only on one of the databases
- a unique tracking code (20) which is visible and corresponding to the code called known code of two databases;
- a serial code (10) which is visible and corresponding to a second code called unknown code and present only on one of the databases;
and the two databases correspond to:
- a first database (BD1) in which the serial code (10) and the tracking code (20) are paired
- a second database (BD2) in which the secret code (30) is paired with the tracking code (20).

3. The authentication system according to one of the preceding claims, wherein said label includes two superimposed substrates:
- a rear substrate including the secret code (30) and the tracking code (20) paired in said second database corresponding to a "rear substrate database" (BDar),
- a front substrate, superimposed on said rear substrate and determining a front face for reading the label, said front substrate including the serial code (10) and being superimposed on the rear substrate so as to allow the readability of the tracking code (20) and to hide the secret code (30),
and in which system, the serial code (10) and the tracking code (20) are paired in the first database corresponding to a database of entered labels (BDen).

4. A method for making an authentication system according to one of the preceding claims, including:
- a step A of making a rear label substrate (110) including the steps:
+ of printing, on said rear substrate, a tracking code (20) and a secret code (30);
+ of optional deposition of a mask (113) on the secret code (30);
+ of pairing the tracking code (20) and the secret code (30), in a database (BDar) of the rear substrates;
- a step B, independent of step A, of making a front substrate (120), including printing a unique serial code (10),
- a step C of forming the label (100), including the steps:
+ of assembling the front substrate (120) on the front face of the rear substrate (110), such that the secret code (30) is covered by said front substrate and such that the tracking code (20) remains visible from the front face of the label;
+ of reading the serial code (10) and the tracking code (20) of the label (100);
- a step D of entering the label (100) in which entering step, the serial code (10) of the label and the tracking code (20) are paired in a database (BDen) of the entered labels;
and in which method, each database (BDar, BDen) is constructed, modified and managed independently of the other database.

5. The method according to claim 4, further including a preliminary step in which attributes of a family of labels, to which the label (100) belongs, are defined, said attributes including dimensions of the front substrate (120) and of the rear substrate (110) and the locations of the different markings including the serial code (10), the tracking code (20) and the secret code (30).

6. The method according to claim 4 or claim 5, wherein at least two steps from step A of making a rear substrate, step B of making a front substrate and step C of forming the label are implemented at different times, and/or in different places and/or by different operators.

7. The method according to one of claims 4 to 6, wherein during the assembly of the front substrate (120) on the front face of the rear substrate (110) in step C of forming the label (100) the tracking code (20) of said rear substrate is not covered by said front substrate or is visible through a transparent window (121) of said front substrate and wherein:
- the serial code (10) is printed on the front substrate (120) to be physically superimposed on the secret code (30) in the label and such that the access to said secret code causes the destruction of the marking of said serial code.

8. The method according to one of claims 4 to 7, wherein all or part of the markings of the front substrate (120) is made on a rear face of said front substrate in a transparent area of said front substrate to be readable in window sticker from the front face of said front substrate.

9. The method according to one of claims 4 to 8, wherein the serial code (10) is incorporated into all or part of an alphanumeric character string, a bar code, a two-dimensional code (11), a contactless reading electronic chip.

10. The method according to one of claims 4 to 9, wherein the serial code (10) and the tracking code (20) are incorporated into a two-dimensional code (11) and/or a contactless reading electronic chip, said tracking code (20) also including a url for connecting to a service for verifying the authenticity of the label.

11. A method for implementing an authentication system according to one of claims 1 to 3, including:
- a first step of accessing a software application by means of acquiring a serial code, said software application being configured to query a first database (BD1, BDen) and verify said serial code and a tracking code paired in the database (BD1, BDen) and their availability for use, said first database being managed by a first actor;
- a second step, performed following a positive verification during the first step, in which the software application queries a second database (BD2, BDar) by means of the tracking code (20) to obtain a secret code paired with said tracking code (20), said second database being managed by a second actor,
- a third step in which a label is authenticated when the secret code transmitted by the rear substrate database (BDar) corresponds to the secret code read on the label;
- a fourth step in which the software application informs the first database (BD1, BD2) of the use of the secret code (30).

12. The method for implementing an authentication system according to claim 11, wherein:
the first step includes the acquisition of the serial code (10) by means of a portable terminal, and optionally of the tracking code (20), readable from a front face of said label; and
the second or third step includes:
- a removal of a front substrate (120) from the label (100) to free a front face of a rear substrate (110) and, where appropriate, an elimination of an optional mask (113) covering the secret code (30) so as to make it readable;
- acquisition of the secret code (30) and verification by the software application that said secret code (30) corresponds to the secret code paired with the tracking code (20) in the database (BDar).

13. The method for implementing an authentication system according to claim 11 or 12, wherein during the first step the software application is configured to simultaneously send, the tracking code (20) to a third actor, and during the third step:
- the software application is configured to transmit the result of the authentication of the label to said third actor or;
- the software application is configured to transmit the secret code of the second rear substrate database (BD2, BDar) and the secret code read on the label so that said third actor validates the authentication of said label.

14. The method for implementing an authentication system according to claim 13, wherein the third actor validates an action upon authentication of a label, and identification data of said act are entered in at least one of the two databases (BD1, BDen, BD2, BDar) associated with at least one of the codes of the label.

15. The method for implementing an authentication system according to claim 13, wherein the action validated by the third actor is an electronic sending of a document to a person holding a label of the system, and a document digest is saved in one of the databases (BD1, BDen, BD2, BDar) associated with at least one of the codes of the label (10, 20, 30) .

16. The method according to claim 11 to 15, wherein a database (BDst) includes a status code indicating that the label (100), identified by the serial code (10) recognised as paired, directly in the database (BDen) of the entered labels was or was not implemented during a first control, and further including a step of verifying the status code of the label (100) in the database (BDst) and wherein a rejection message is emitted when said status code indicates that said label has been implemented in a prior control.
